# EUROPEAN PATENT SPECIFICATION

(11) **EP 3 278 610 B1**
(45) Date of publication and mention of the grant of the patent: **20.03.2019**
(21) Application number: 16754006.1
(22) Date of filing: 14.07.2016
(51) Int. Cl.: G01S 5/00, G01S 5/02, G01S 11/02, H04W 4/02

(54) **DETECTING THE CONTEXT OF A USER DEVICE USING WIRELESS SIGNAL CHARACTERISTICS**
ERKENNUNG DES KONTEXTS EINES BENUTZERGERÄTS UNTER VERWENDUNG VON DRAHTLOSSIGNALEIGENSCHAFTEN
DÉTECTION DU CONTEXTE D'UN ÉQUIPEMENT UTILISATEUR SUR LA BASE DES CARACTÉRISTIQUES D'UN SIGNAL SANS FIL

(30) Priority: 17.07.2015 US 201514802016
(43) Date of publication of application: 07.02.2018
(73) Proprietor: Google LLC, Mountain View, CA 94043 (US)
(72) Inventor: BHADRICHA, Chetan Parshottam, Mountain View, California 94043 (US); VARSHAVSKY, Alexander, Mountain View, California 94043 (US); MAGGIOLO, Stefano, Mountain View, California 94043 (US)
(74) Representative: Williams, Michael David
(86) International application number: PCT/US2016/042242
(87) International publication number: WO 2017/015050

(56) References cited:
- US-A1- 2012 170 560
- US-A1- 2014 266 789
- US-A1- 2015 024 787
- US-B1- 9 037 125

## Description

### FIELD

The present disclosure relates generally to determining a context associated with a user based on observed beacon devices and, more particularly, to inferring user context based on a comparison of location data to detected beacon device data.

### BACKGROUND

Many different techniques exist for attempting to determine a location associated with a device. For example, a location of a device can be determined based on data associated with a satellite positioning system, IP address, cell triangulation, proximity to Wi-Fi access points, proximity to beacon devices, or other data.

The locations determined by one or more devices can be raw location data. For example, the reported location can be a geocode that identifies a latitude and longitude. Therefore, such raw location data can fail to identify a name of the particular entity (e.g., the name of the restaurant, park, or other point of interest) that the user was visiting at the time. Such raw location data can further fail to identify a context associated with the user at the location. A context may include, for example, information relating to an environment in which the user is currently present; an activity the user is engaging in (such as travel, exercise, spectating, etc.) and/or situations/circumstances surrounding the user. Such a context may be helpful in providing location based functionality to a user.

Location based functionality can allow a user device, such as a smart phone, tablet or wearable computing device, to receive information and to perform actions associated with the information. Such location based functionality can be implemented, for instance, through the use of beacon devices. Beacon devices are a recent technology that can be used, for instance, in determining proximity and location. A beacon device is typically a small, low cost, self-contained device that can periodically provide (e.g., broadcast using a short range wireless communication technology) information. A user device can receive the information and use the knowledge of the identity of the beacon device and proximity to the beacon device for various purposes, including determining location, communication, asset tracking, retail identification, safety, etc.
US 2015/024787 A1 relates to a mobile device tracking prevention method and system. US 2012/170560 A1 relates to a method of estimating a location of a mobile device in transportation using WiFi (RTM).

### SUMMARY

The invention is set out in the appended set of claims.

Any embodiment, example or aspect referred to in the following description, which is not covered by the scope of the appended claims, is considered as not being part of the present invention.

Aspects and advantages of embodiments of the present disclosure will be set forth in part in the following description, or may be learned from the description, or may be learned through practice of the embodiments.

One example aspect of the present disclosure is directed to a computer-implemented method determining user context. The method includes receiving, by one or more computing devices, location information associated with a user. The method further includes detecting, by the one or more computing devices, first beacon data broadcast by a first set of beacon devices. The method further includes, subsequent to detecting the first beacon data, detecting, by the one or more computing devices, second beacon data broadcast by a second set of beacon devices. The method further includes determining, by the one or more computing devices, whether the received location information is indicative of a changing location of the user. The method further includes determining, by the one or more computing devices, whether the second beacon data corresponds to a change in beacon data from the first beacon data. The method further includes determining, by the one or more computing devices, a context associated with the user based at least in part on whether the received location information corresponds to a changing location of the user and based at least in part on whether the second beacon data corresponds to a change in beacon data from the first beacon data.

The method may further comprise providing for display, by the one or more computing devices, one or more notifications associated with the determined context.

Determining whether the second beacon data corresponds to a change in beacon data from the first beacon data may further comprise identifying, by the one or more computing devices, a number of beacon devices included in the second set of beacon devices but not included in the first set of beacon devices. Determining, by the one or more computing devices, whether the second beacon data corresponds to a change in beacon data may further comprise determining, by the one or more computing devices, that the second beacon data does not correspond to a change in beacon data from the first beacon data when the number of beacon devices included in the second set of beacon devices but not included in the first set of beacon devices is below a threshold number. The method further include, when it is determined that the received location information is indicative of a changing location of the user and it is determined that the second beacon data does not correspond to change in beacon data, determining the context associated with the user comprises inferring, by the one or more computing devices, a mode of transportation of the user.

Determining, by the one or more computing devices, whether the second beacon data corresponds to a change in beacon data may comprise determining, by the one or more computing devices, that the second beacon data does correspond to a change in beacon data from the first beacon data when the number of beacon devices that broadcast included in the second set of beacon devices but not included in the first set of beacon devices. The method may further include, when it is determined that the location information does not correspond to a changing location of the user and it is determined that the second beacon data does correspond to a change in beacon data, determining the context associated with the user comprises determining, by the one or more computing devices, that the user is located in an urban setting.

Determining, by the one or more computing devices, the information indicating a context associated with the user may comprise determining, by the one or more computing devices, that the user is travelling in a public transit vehicle. Providing, by the one or more computing devices, for display one or more notifications may comprise providing for display, by the one or more computing devices, at least a first notification that indicates at least one of a route or a time schedule associated with the public transit vehicle.

The method may further comprise, responsive to determining the information indicating a context associated with the user, adjusting, by the one or more computing devices, a scan rate of scanning for beacon devices.

The method may further comprise associating, by the one or more computing devices, the determined information indicating a context associated with the user with at least one of the location information, the first beacon data, and the second beacon data.

The method may further comprise associating, by the one or more computing devices, the determined information indicating a context associated with the user with the one or more performed actions.

The method may further comprise receiving, by the one or more computing devices, an input from a user indicative of a current activity associated with the user, and associating, by the one or more computing device, the user activity with the first beacon data and the second beacon data.

Determining the context associated with the user may further comprise identifying, by the one or more computing devices, previously determined information indicating a context associated with at least one of the location information, the first beacon data, and second beacon data.

The method may further comprise determining, by the one or more computing devices, one or more speeds at which the user travels over a period of time in which the location data is received and the first and the second beacon device is detected. Determining, by the one or more computing devices, the context associated with the user may comprise determining, by the one or more computing devices, the context associated with the user based at least in part on the determined one or more speeds.

The method may further comprise determining, by the one or more computing devices, that the one or more speeds match a profile associated with vehicular travel. Determining, by the one or more computing devices, the information indicating a context associated with the user may comprise determining, by the one or more computing devices, the context associated with the user based at least in part on the determined profile.

The profile may comprise at least one of one or more expected speeds associated with vehicular travel over one or more time periods, or the location of one or more stops relative to a route of vehicular travel.

Other example aspects of the present disclosure are directed to systems, apparatus, tangible, non-transitory computer-readable media, user interfaces, memory devices, and electronic devices for determining a user context based on a comparison of location data to detected beacon device data.

These and other features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an example beacon device system according to example embodiments of the present disclosure;
FIG. 2 depicts a flow diagram of an example method of determining a user context according to example embodiments of the present disclosure;
FIG. 3 depicts a flow diagram of an example method of determining whether second beacon data corresponds to a change in beacon data from first beacon data; and
FIG. 4 depicts an example system according to example embodiments of the present disclosure.

### DETAILED DESCRIPTION

Reference now will be made in detail to embodiments, one or more examples of which are illustrated in the drawings. Each example is provided by way of explanation of the embodiments, not limitation of the present disclosure. In fact, it will be apparent to those skilled in the art that various modifications and variations can be made to the embodiments without departing from the scope of the present disclosure. For instance, features illustrated or described as part of one embodiment can be used with another embodiment to yield a still further embodiment. Thus, it is intended that aspects of the present disclosure cover such modifications and variations.

Example aspects of the present disclosure are directed to determining user activity based on one or more characteristics of location data and wireless signals. In particular, a user device such as a smart phone or tablet can receive beacon data from various beacon devices. The user device can also continuously or periodically determine location data that describes a current location of the user device. The user device and/or a communicatively coupled server device can analyze the received beacon data and the location data to infer a context of the user device or the activities of a user of the user device. In particular, the user device can infer the context of the user device based on whether the beacon data and/or the location data remain consistent or change over time. As one particular example, if the beacon data remains constant (e.g., the user device continually receives beacon data broadcast by the same beacon device(s) over time) while the location data indicates that the location of the user device is changing, it can be inferred that the user device is traveling within a vehicle such as a train and that the beacon device(s) are included in the vehicle. Thus, a comparison of one or more temporal characteristics of the beacon data and the location data can assist in inferring the context of the user device.

More particularly, a user device can be configured to detect one or more wireless signals. A user device can be a laptop, smartphone, tablet, wearable computing device, or any other suitable computing device capable of being carried or otherwise transported by a user while in operation. The detected wireless signals, for instance, can include beacon data broadcast by one or more beacon devices. A beacon device can be a communication device that periodically broadcasts (e.g., using short range wireless communication technology) data associated with the beacon device. A beacon device can be, for instance, a radio frequency (RF) beacon device (e.g., a Bluetooth™ Low Energy (BLE) beacon device, or a WiFi access point), an infrared beacon device, a radio frequency identification (RFID) tag, or other suitable beacon device. Such broadcasted data can include an identifying signal (e.g., universally unique ID, a URL, a sequence of bytes, an encrypted identifier, etc.) indicative of an identifier associated with the beacon device. A user device within the broadcast range of the beacon device can scan for and detect such beacon data and can extract the identifying signal from the beacon data to determine an identity of the beacon device.

The user device can be further configured to determine and/or receive location data indicative of a geographic location of the user device. For instance, the user device can determine or receive raw location data (e.g., latitude, longitude coordinates). The location data can be determined, for instance, using a positioning system associated with the user device. The positioning system can determine a geographic location based on, for instance, GPS signals, IP address, cell triangulation, etc.

In some embodiments, in order to obtain the benefits of the techniques described herein, the user may be required to allow the collection and analysis of location information associated with the user or the user device. Therefore, in some embodiments, users can be provided with an opportunity to control settings associated with whether programs or features collect such information. If the user does not allow collection and use of such signals, then the user may not receive the benefits of the techniques described herein. For instance, changes to these settings can cause location determination and/or beacon scanning to be enabled or disabled. The user can also be provided with tools to revoke or modify consent. In addition, in some embodiments, certain information or data can be treated in one or more ways before it is stored or used, so that personally identifiable information is removed.

According to an aspect of the present disclosure, a user device or communicatively coupled server computing device can infer a context associated with the user device based at least in part on the detected beacon data and the determined location data. In particular, a user device can infer user activity based on one or more characteristics of the beacon data in conjunction with one or more characteristics of the location data. For example, the user device can be configured to recognize patterns in location data and beacon data, and to correlate such patterns with a user activity or context.

For instance, a context can be inferred when a first signal or group of signals is consistent while a second signal or group of signals is changing. As an example, location data (e.g., latitude, longitude) determined by the user device can be indicative of a consistent (or substantially consistent) geographic location of the user device. If, at the same time, beacon data detected by the user device is changing, a context can be inferred. For instance, in such scenario, it can be inferred that the user device is located in a crowded urban setting.

As another example, if the user device detects beacon data only from a single, consistent beacon device or group of beacon devices, and determines that the location data indicative of a changing geographic location over a period of time, it can be inferred that the user device is traveling in a vehicle having a beacon device on board. For instance, it can be inferred that the user device is traveling in a train, bus, or other form of transportation.

Responsive to inferring a context associated with the user device, the user device can perform one or more actions associated with the context. For instance, if it is inferred that the user is located in an urban setting, the user device can increase a scan rate of scanning for beacon devices. As another example, if it is determined that the user is traveling in a vehicle (e.g., train) having a beacon device, the user device may provide for display one or more notifications associated with the vehicle. For instance, the notifications can include information associated with a route or schedule of the train. It will be appreciated that various other suitable actions can be performed.

In example embodiments, the user device can store the determined inferences and/or the actions performed responsive to the inferences. The user device can further associate the stored inferences and/or actions with the location data and/or beacon data used to determine the inferences. In this manner, the same or a different user device may infer a current context based at least in part on previously determined location data and/or beacon data. In particular, if a user device detects beacon data that has previously been associated with an inferred context, the user device can infer a current context based on the previously stored inference. For instance, in continuing the train example from above, if, on a subsequent trip on the train, the user device detects beacon data from the same beacon device, the user device can infer that the user device is currently on the train without needing to determine location data. The user device can then perform one or more actions associated with the train (e.g., previously stored actions and/or other actions).

In further embodiments, the user can input a context responsive to a prompt from the user device. In particular, the user device can display a user interface that prompts the user to provide information indicative of an activity of the user. Responsive to such user input, the user device can correlate (e.g., associate inputted activity with location data and/or beacon data in a local or remote database) the inputted activity with location data and/or beacon data currently received by the user device. In this manner, when the user device detects the same (or a similar) data pattern, the user device can infer a context in accordance with the previously inputted activity. In still further embodiments, responsive to an inferred context, the user device can provide a prompt to the user allowing the user to indicate whether the inferred activity is correct.

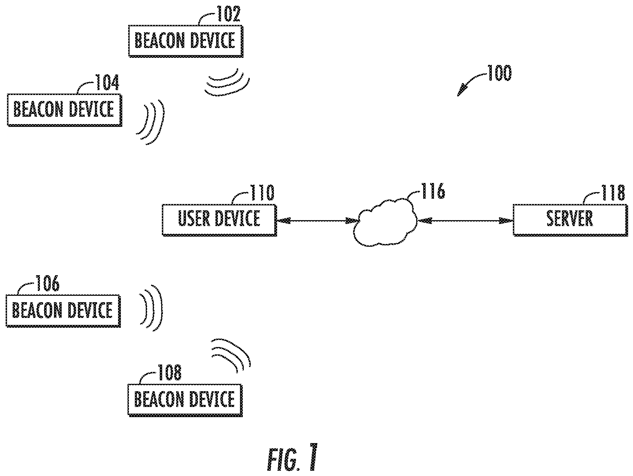

FIG. 1 depicts an example system 100 for inferring user activity according to example embodiments of the present disclosure. System 100 includes a plurality of beacon devices 102-108, a user device 110, and at least one server 118. Beacon devices 102-108 can be used for many different applications, including, for example, co-presence (e.g., two entities becoming aware of each other), location-based gaming, asset tracking, beacon device localization or observing entity localization, telemetry, information provisioning (e.g., use of a user device to obtain various information such as semantic information or geographic information associated with beacon devices 102-108 as the user device moves about the world), intra-beacon communication, payment systems, etc. Other applications can include providing or otherwise permitting access to information associated with a business, such as a menu for a restaurant, providing information associated with a music festival, providing information associated with a transit schedule, etc. The present disclosure provides a general system that can be applicable to the above noted applications or other applications as well.

As indicated above, beacon devices 102-108 can be computing devices that are configured to emit messages. For example, the messages can include data that is broadcast by the beacon devices 102-108. In example embodiments, the data can be used for the purpose of being "noticed" without requiring a two-way connection. Thus, in such embodiments, the entirety of the interaction between the beacon devices 102-108 and the user device 110 can be performed without requiring a connection between the user device and the beacon device or a connection between the beacon device and the server. Instead, all relevant information for the interaction is contained within the data emitted by the beacon device. Limiting beacon device interaction to the broadcasting of data can provide a nominal behavior that allows energy consumption and service life to be modeled and reasonably predicted. In alternative embodiments, beacon devices 102-108 can include computing devices that use two-way communication. For instance, a BLE beacon device using active scanning can implement two-way communication.

As an example, the beacon devices 102-108 can broadcast the data using short range wireless communication technologies such as, for example, Bluetooth, Bluetooth low energy, ZigBee, Near Field Communication, WiFi, or other technologies. Furthermore, although short range wireless communication technologies are provided as an example, any communication method can be used to transmit data from the beacon devices 102-108 to user device 110, including, for example, wired connections, general radio frequency communication, optical communication, infrared communication, magnetic communication, or other communication methods.

In embodiments in which beacon devices employ Bluetooth low energy (BLE) technology for broadcasting, each message can carry a 31-byte payload. As noted, messages can be broadcast events that are capable of being received and processed by any observing entity (e.g., user device 110 or other listening device). Further, the above example implementation using BLE technology is provided as an example only. Other suitable communication protocols having different frame formats or channel assignments can be used, as well. In addition, as certain protocols are modified or replaced over time, the present disclosure can be easily adapted for implementation using such new protocols.

Server 118 can include one or more computing devices configured to communicate with user device 110 over a network 116. As an example, server 118 can be one or more server computing devices. In the instance that a plurality of server computing devices are used, the server computing devices can be arranged according to any suitable computing architecture, including sequential computing architectures, parallel computing architectures, or combinations thereof. As indicated above, user device 110 can include smartphones, tablets, wearable computing devices, or any other suitable mobile computing device capable of being carried by a user while in operation.

Network 116 can be any type of communications network, such as a local area network (e.g., intranet), wide area network (e.g., Internet), or some combination thereof and can include any number of wired or wireless links. In general, communication between the server 118 and user device 110 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Furthermore, although user device 110 is shown as communicating directly with server 118 over network 116, there can be any number of intervening devices between user device 110 and server 118. As an example, in some embodiments, groups of user devices can be organized in a network (e.g., a mesh network) and can relay messages back and forth from a particular user device to server 118.

As indicated above, user device 110 can be further configured to determine a geographic location of user device 110. One or more characteristics of the determined location can be used by user device 110 to infer a context associated with user device 110. In particular, the one or more characteristics of the determined location can be used in conjunction with one or more characteristics of any detected beacon data to infer a context.

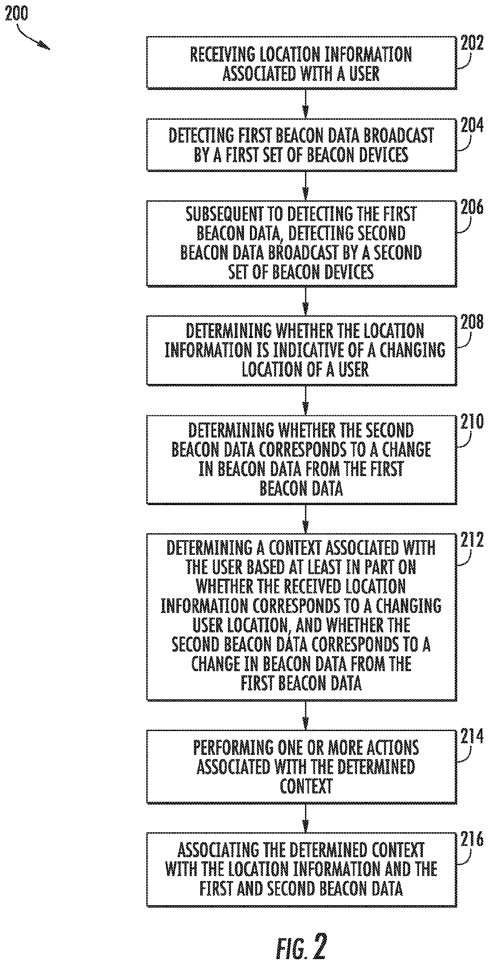

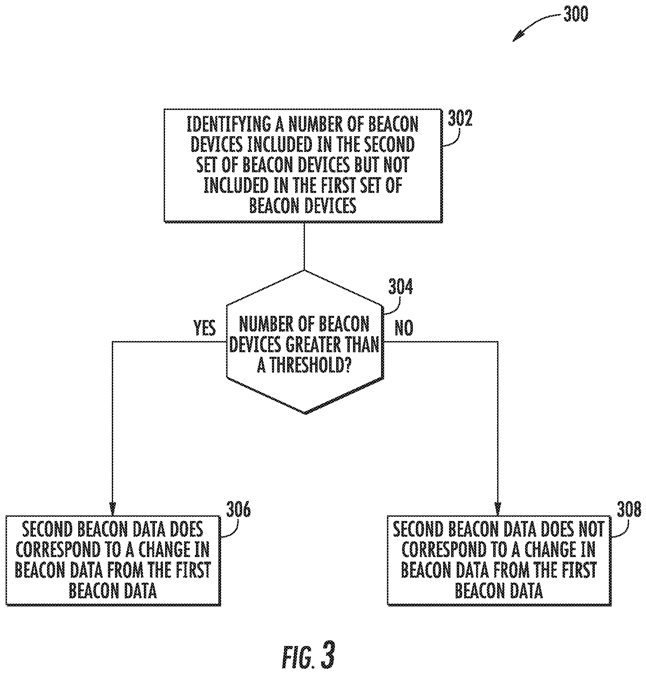

For instance, FIG. 2 depicts a flow diagram of an example method (200) of inferring a context associated with a user device. Method (200) can be implemented by one or more computing devices, such as one or more of the computing devices depicted in FIG. 3. In addition, FIG. 2 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure.

At (202), method (200) can include receiving location information associated with a user. The location data can be determined, for instance, using a positioning system associated with the user device. As described above, the positioning system can be configured to determine a geographic location based on, for instance, GPS signals, IP address, cell triangulation, etc. Such location information can correspond to a stationary location of a user or a changing location of a user.

At (204), method (200) can include detecting first beacon data from a first set of beacon devices. Each of the beacon devices in the first set of beacon devices can be configured to broadcast (e.g., using short range wireless communication technologies) beacon data that includes an identifying signal associated with the beacon device and/or other information associated with the beacon device. A user device can be configured to scan for beacon data, and, when located in the broadcast range of the beacon devices, detect the beacon data. Upon detecting beacon data, the user device can determine an identity of the beacon device that broadcasted the beacon data from the identifying signal.

At (206), method (200) can include, subsequent to detecting the first beacon data, detecting second beacon data from a second set of beacon devices. The second beacon data can be the same as the first beacon data or the second beacon data can be different than the first beacon data. For instance, the second set of beacon devices can include some or all of the same beacon devices as the first set of beacon devices, or the second set of beacon devices can include completely different beacon devices. In example embodiments, the second beacon data can be the beacon data detected some period of time after the first beacon data is detected. For instance, the second beacon data can include the beacon data detected during one or more subsequent scans for beacon data.

At (208), method (200) can include determining whether the received location information is indicative of a changing geographic location of a user. For instance, such location information can change over time, as the user changes location. As one example, the location information can be determined to be indicative of a changing geographic location of the user if the location information describes two or more locations which are separated by more than a threshold distance. As another example, one or more clustering techniques can be performed to determine whether the locations described by the location data correspond to a single cluster or correspond to multiple clusters that are indicative of a changing location.

At (210), method (200) can include determining whether the second beacon data corresponds to a change in beacon data from the first beacon data. As indicated above, the first and second beacon data can be broadcast by one or more beacon devices and detected by the user device when the user device is within the broadcast range of the beacon device(s). Such beacon data can include an identifying signal associated with the broadcasting beacon device(s). The identifying signal can be used by the user device to determine an identity of the beacon device(s).

As one example, whether the second beacon data corresponds to a change in beacon data from the first beacon data can be determined based at least in part on the identifying signals associated with the first and second beacon data. For instance, FIG. 3 depicts a flow diagram of an example method (300) of determining whether second beacon data corresponds to a change in beacon data from first beacon data according to example embodiments of the present disclosure. In particular, FIG. 3 depicts an example implementation of (210) of method (200). At (302), method (300) can include identifying a number of beacon devices included in the second set of beacon devices but not included in the first set of beacon devices. For instance, such beacon devices can be identified by comparing the identifying signals associated with the second beacon data and the identifying signals associated with the first beacon data to determine an overlap in beacon devices.

At (304), method (300) can include determining whether the number of beacon devices included in the second set of beacon devices but not included in the first set of beacon devices is greater than a threshold value. As another example, instead of comparing a number of distinct beacon devices to a threshold number, at (304) a percentage of the beacon devices that are included in the second set of beacon devices but not the first set of beacon devices can be compared to a threshold percentage.

At (306), method (300) can include, if the number of beacon devices included in the second set of beacon devices but not included in the first set of beacon devices is greater than the threshold, determining that the second beacon data corresponds to a change in beacon data from the first beacon data. However, if it is determined that the number of beacon devices included in the second set of beacon devices but not included in the first set of beacon devices is less than or equal to the threshold, method (300) can include determining that the second beacon data does not correspond to a change in beacon data from the first beacon data (308).

Referring back to FIG. 2, at (212), method (200) can include determining a context associated with the user based at least in part on the location information, the first beacon data and the second beacon data. In particular, the context can be determined based at least in part on whether the received location information corresponds to a changing location of the user, and based at least in part on whether the second beacon data corresponds to a change in beacon data from the first beacon data.

For instance, as indicated above, the received location information can correspond to a stationary (or substantially stationary) or changing location of the user and/or user device. In example embodiments, if the location information is indicative of a changing location, while the first and second beacon data remain consistent (e.g., the second beacon data does not correspond to a change in beacon data from the first beacon data), a mode of transportation associated with the user can be inferred. For instance, in such embodiments, it can be inferred that the user is riding on a moving train, or other vehicle, having an on-board beacon device.

In further embodiments, if the location information corresponds to a stationary (or substantially stationary) location, while the second beacon data does correspond to a change in beacon data from the first beacon data, it can be determined that the user is located in a crowded urban environment.

Various other suitable contextual inferences can be made based at least in part on one or more characteristics of the location data, the first beacon data, and/or second beacon data. For instance, one or more contexts can be inferred based at least in part on a determined speed at which a user device (and/or user) is traveling. A speed at which the user device is traveling can be determined, for instance, based at least in part on the location information, the first beacon data, and/or the second beacon data.

Such a determined speed can be used in conjunction with the location data, the first beacon data, and/or the second beacon data to infer a context associated with the user device. As one example, the observed speeds can be compared to various transportation profiles that describe one or more of expected speeds or expected stops associated with various forms of transportation. For instance, in continuing the above example including the train, the speed at which the user device is traveling can be used to determine if the user is on the train. In this manner, if the user's location is changing at a particular rate (or range of rates), that correspond to a typical train (or other suitable vehicle) speed, and if the first and second beacon data remain consistent over one or more periods of time, it can be determined that the user is on a train (or other suitable vehicle) having an on-board beacon device.

Thus, in example embodiments, a rate of change of a user location can be associated with a profile associated with vehicular travel patterns. For instance, such profile can correspond to a train or other public transportation route or schedule. In particular, such profile be stored in a memory of the user device and/or at a server device, and can take into account a typical speed of the particular mode of transportation, the location of any stops along the route, and/or various other factors. If a rate of change of the location of a user device corresponds to a profile of vehicular travel, a contextual inference can be determined according to example embodiments of the present disclosure.

As indicated above, in alternative embodiments, a context can be inferred in conjunction with a user input. For instance a user device can be configured to receive a user input indicative of a user activity or context. The user device can be further configured to, subsequent to determining a context, receive a user input evaluating the accuracy of the determined context.

At (214), method (200) can include performing one or more actions associated with the determined context. For instance, the one or more actions can include providing information associated with the context to the user. Such information can be textual information, audio information, video information, etc. The information can be information relating to the context of the user, such as information relating to the location and/or mode of transportation. In example embodiments, the one or more actions can include providing one or more notifications to the user. For instance, the one or more notifications can include providing for display one or more applications, web browsers, video files, maps, advertisements, etc.

At (216), method (200) can include associating the determined context with the location information and/or the first and second beacon data. In particular, the context can be stored in a memory of the user device and/or a server (e.g., server 118). The context can be further associated with the location information and/or the first and second beacon data. In this manner, when a user device subsequently detects the same, or substantially the same, location information and/or beacon data, the user device can identify the previously stored location information and beacon data. The user device can then determine a current context based at least in part on the previously stored context. For instance, if the user takes a subsequent trip on the same train, the user device can recognize the identity of the on-board beacon device, and infer that the user is on the train without using the location information.

In alternative embodiments, a context can be determined based at least in part on different location information and/or beacon data that has a similar data pattern. In particular, such different location information and/or beacon data can share one or more characteristics with the previously stored location information and beacon data although the identities of the beacon devices and/or the raw location can be different. For instance, in continuing the train example, if the user subsequently rides on a different train in a different location having an on-board beacon device, the user device can determine that, although the identifying signals in the currently detected beacon data are not the same as the identifying signals in the previously detected beacon data, the characteristics (e.g., pattern) of the current location data and beacon data are similar to the characteristics of the previously detected location data and beacon data. The user device can use this similarity to infer that the user is on a different train.

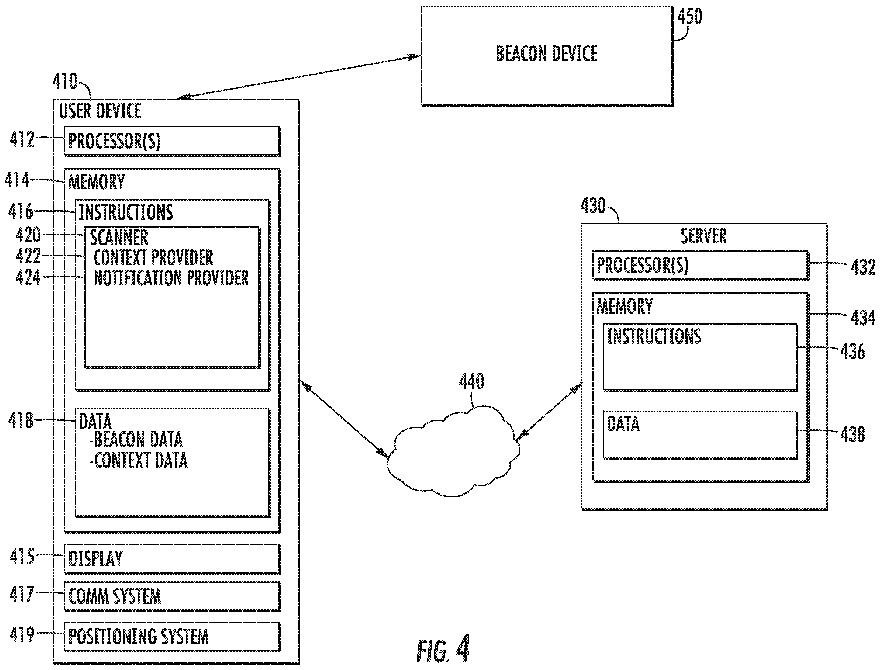

FIG. 4 depicts an example computing system 400 that can be used to implement the methods and systems providing beacon-based notifications according to example aspects of the present disclosure. System 400 can include a user device 410. User device 410 can be any suitable type of mobile computing device, such as a smartphone, tablet, cellular telephone, wearable computing device, or any other suitable mobile computing device capable of being carried or otherwise transported by a user while in operation. User device 410 can include one or more processor(s) 412 and one or more memory devices 414.

The one or more processor(s) 412 can include any suitable processing device, such as a microprocessor, microcontroller, integrated circuit, logic device, one or more central processing units (CPUs), graphics processing units (GPUs) dedicated to efficiently rendering images or performing other specialized calculations, and/or other processing devices, such as a system on a chip (SoC) or a SoC with an integrated RF transceiver. The one or more memory devices 414 can include one or more computer-readable media, including, but not limited to, non-transitory computer-readable media, RAM, ROM, hard drives, flash memory, or other memory devices.

The one or more memory devices 414 can store information accessible by the one or more processors 412, including instructions 416 that can be executed by the one or more processors 412. For instance, the memory devices 414 can store instructions 416 for implementing a scanner 420, context provider 422, a notification provider 424, and/or various aspects of any of the methods disclosed herein. Scanner 420 can be configured to scan for one or more beacon devices. Context provider 422 can be configured to a context associated with a user. Notification provider 424 can be configured to provide for display one or more notifications associated with a beacon device.

The one or more memory devices 414 can also include data 418 that can be retrieved, manipulated, created, or stored by the one or more processors 412. The data can include, for instance, location information, beacon information, context data and/or other information.

It will be appreciated that scanner 420, context provider 422, and notification provider 424 can include computer logic utilized to provide desired functionality. Thus, scanner 420, context provider 422, and notification provider 424 can be implemented in hardware, application specific circuits, firmware and/or software controlling a general purpose processor. In one embodiment, scanner 420, context provider 422, and notification provider 424 can be program code files stored on the storage device, loaded into one or more memory devices and executed by one or more processors or can be provided from computer program products, for example computer executable instructions, that are stored in a tangible computer-readable storage medium such as RAM, ROM, flash memory, hard disk or optical or magnetic media. In example embodiments, scanner 420, context provider 422, and notification provider 424 can be implemented in hardware independent of the one or more processors. For instance, scanner 420, context provider 422, and notification provider 424 can be implemented using a WiFi and/or Bluetooth transceiver, or microcontroller. When software is used, any suitable programming language or platform can be used to implement scanner 420, context provider 422, or notification provider 424.

User device 410 can include various input/output devices for providing and receiving information from a user, such as a touch screen, touch pad, data entry keys, speakers, and/or a microphone suitable for voice recognition. For instance, user device 410 can have a display 415 for presenting a user interface to a user. User device 410 can further include a communication system 417. Communication system 417 can be used to communicate with a beacon device, such as beacon device 450.

User device 410 can further include a positioning system 419. The positioning system 419 can be any device or circuitry for determining the position of remote computing device. For example, the positioning device can determine actual or relative position by using a satellite navigation positioning system (e.g., a GPS system, a Galileo positioning system, the GLObal Navigation satellite system (GLONASS), the BeiDou Satellite Navigation and Positioning system), an inertial navigation system, a dead reckoning system, based on IP address, by using triangulation and/or proximity to cellular towers or WiFi hotspots, WiFi time-of-flight, and/or other suitable techniques for determining position.

User device 410 can also include a network interface used to communicate with one or more remote computing devices (e.g., server 430) over a network 440. The network interface can include any suitable components for interfacing with one more networks, including for example, transmitters, receivers, ports, controllers, antennas, or other suitable components.

In some implementations, the user device can be in communication with a remote computing device, such as a server 430 over network 440. Server 430 can be one or more computing devices, such as described above with regard to server 118 in FIG. 1.

Similar to the user device 410, server 430 can include one or more processor(s) 432 and a memory 434. The one or more processor(s) 432 can include one or more central processing units (CPUs), and/or other processing devices. The memory 434 can include one or more computer-readable media and can store information accessible by the one or more processors 432, including instructions 436 that can be executed by the one or more processors 432, and data 438. For instance, the memory 434 can store instructions 436 that when implemented by the one or more processors 432, cause the one or more processors to perform operations.

Server 430 can also include a network interface used to communicate with computing device 410 over network 440. The network interface can include any suitable components for interfacing with one more networks, including for example, transmitters, receivers, ports, controllers, antennas, or other suitable components.

Network 440 can be any type of communications network, such as a local area network (e.g., intranet), wide area network (e.g., Internet), cellular network, or some combination thereof. Network 440 can also include a direct connection between user device 410 and server 430. Network 440 can include any number of wired or wireless links and can be carried out using any suitable communication protocol.

System 400 can further include one or more beacon devices, such as beacon device 450. Beacon device 450 can broadcast messages such as described with regard to beacon devices 102-110 in FIG. 1. Beacon device 450 can be implemented using any suitable computing device(s). Beacon device 450 can include one or more processors and a memory. Although only one beacon device is depicted in FIG. 4, it will be appreciated by those skilled in the art that any suitable number of beacon devices can be included in system 400.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, server processes discussed herein can be implemented using a single server or multiple servers working in combination. Databases and applications can be implemented on a single system or distributed across multiple systems. Distributed components can operate sequentially or in parallel.

While the present subject matter has been described in detail with respect to specific example embodiments thereof, it will be appreciated that those skilled in the art, upon attaining an understanding of the foregoing can readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A computer-implemented method (200) of determining information indicating a context associated with a user device, the method being performed by the user device and comprising:
receiving (202) location information associated with the user device;
detecting (204) first beacon data broadcast by a first set of beacon devices;
subsequent to detecting the first beacon data, detecting (206) second beacon data broadcast by a second set of beacon devices;
determining (208) whether the received location information is indicative of a changing location of the user device;
determining (210) whether the second beacon data corresponds to a change in beacon data from the first beacon data;
determining (212) information indicating a context associated with the user device based at least in part on whether the received location information corresponds to a changing location of the user device and based at least in part on whether the second beacon data corresponds to a change in beacon data from the first beacon data; and
providing for display one or more notifications associated with the determined information indicating a context associated with the user device.

2. The computer-implemented method of claim 1, wherein determining whether the second beacon data corresponds to a change in beacon data from the first beacon data further comprises identifying (302) a number of beacon devices included in the second set of beacon devices but not included in the first set of beacon devices.

3. The computer-implemented method of claim 2, wherein determining whether the second beacon data corresponds to a change in beacon data from the first beacon data further comprises determining (304) that the second beacon data does not correspond to a change in beacon data from the first beacon data when the number of beacon devices included in the second set of beacon devices but not included in the first set of beacon devices is less than or equal to a threshold number and, optionally, wherein, when it is determined that the received location information is indicative of a changing location of the user device and it is determined that the second beacon data does not correspond to change in beacon data from the first beacon data, determining the information indicating a context associated with the user device comprises inferring a mode of transportation of the user device.

4. The computer-implemented method of claim 2, wherein determining whether the second beacon data corresponds to a change in beacon data from the first beacon data comprises determining (304) that the second beacon data does correspond to a change in beacon data from the first beacon data when the number of beacon devices included in the second set of beacon devices but not included in the first set of beacon devices is greater than a threshold number.

5. The computer-implemented method of claim 4, wherein, when it is determined that the location information does not correspond to a changing location of the user device and it is determined that the second beacon data does correspond to a change in beacon data from the first beacon data, determining the information indicating a context associated with the user device comprises determining that the user device is located in an urban setting.

6. The computer-implemented method of any preceding claim, wherein:
determining the information indicating a context associated with the user device comprises determining that the user device is travelling in a public transit vehicle; and
providing for display one or more notifications comprises providing for display at least a first notification that indicates at least one of a route or a time schedule associated with the public transit vehicle.

7. The computer-implemented method of any preceding claim, further comprising, responsive to determining the information indicating a context, adjusting a scan rate of scanning for beacon devices.

8. The computer-implemented method of claim 6, further comprising associating the determined information indicating a context with at least one of the location information, the first beacon data, and the second beacon data.

9. The computer-implemented method of claim 8, further comprising associating the determined information indicating a context with the one or more performed actions.

10. The computer-implemented method of any preceding claim, further comprising:
receiving an input from a user of the user device indicative of a current activity associated with the user; and
associating the user activity with the first beacon data and the second beacon data.

11. The computer-implemented method of any preceding claim, wherein determining the information indicating a context associated with the user device further comprises identifying a previously determined information indicating a context associated with at least one of the location information, the first beacon data, and second beacon data.

12. The computer-implemented method of any preceding claim, further comprising:
determining one or more speeds at which the user travels over a period of time in which the location data is received and the first and the second beacon device is detected;
wherein determining the information indicating a context associated with the user device comprises determining the information indicating a context associated with the user device based at least in part on the determined one or more speeds.

13. The computer-implemented method of claim 12, further comprising:
determining that the one or more speeds match a profile associated with vehicular travel;
wherein determining the information indicating a context associated with the user device comprises determining the information indicating a context associated with the user device based at least in part on the determined profile and, optionally, wherein the profile comprises at least one of one or more expected speeds associated with vehicular travel over one or more time periods, or the location of one or more stops relative to a route of vehicular travel.

14. A computer program for determining information indicating a context associated with a user device comprising computer readable instructions configured to cause the user device to carry out the method of any preceding claim.

15. A user device for determining information indicating a context associated with the user device, comprising means arranged to execute the computer program of claim 14.

## Patentansprüche

1. Computerimplementiertes Verfahren (200) zum Bestimmen von Informationen, die einen mit einer Benutzervorrichtung assoziierten Kontext angeben, wobei das Verfahren durch die Benutzervorrichtung durchgeführt wird, und umfassend:
Empfangen (202) von mit der Benutzervorrichtung assoziierten Ortsinformationen;
Detektieren (204) erster Bakendaten, die durch eine erste Menge von Bakenvorrichtungen rundgesendet werden;
anschließend an das Detektieren der ersten Bakendaten, Detektieren (206) zweiter Bakendaten, die durch eine zweite Menge von Bakenvorrichtungen rundgesendet werden;
Bestimmen (208), ob die empfangenen Ortsinformationen einen sich verändernden Ort der Benutzervorrichtung angeben;
Bestimmen (210), ob die zweiten Bakendaten mit einer Veränderung der Bakendaten von den ersten Bakendaten korrespondieren;
Bestimmen (212) von Informationen, die einen mit der Benutzervorrichtung assoziierten Kontext angeben, basierend mindestens teilweise darauf, ob die empfangenen Ortsinformationen mit einem sich verändernden Ort der Benutzervorrichtung korrespondieren, und basierend mindestens teilweise darauf, ob die zweiten Bakendaten mit einer Veränderung der Bakendaten von den ersten Bakendaten korrespondieren; und
Bereitstellen, zur Anzeige, einer oder mehrerer mit den bestimmten Informationen assoziierten Benachrichtigungen, die einen mit der Benutzervorrichtung assoziierten Kontext angeben.

2. Computerimplementiertes Verfahren nach Anspruch 1, wobei Bestimmen, ob die zweiten Bakendaten mit einer Veränderung der Bakendaten von den ersten Bakendaten korrespondieren, ferner umfasst, eine Anzahl von Bakenvorrichtungen, die in der zweiten Menge von Bakenvorrichtungen enthalten sind, aber nicht in der ersten Menge von Bakenvorrichtungen enthalten sind, zu identifizieren (302).

3. Computerimplementiertes Verfahren nach Anspruch 2, wobei Bestimmen, ob die zweiten Bakendaten mit einer Veränderung der Bakendaten von den ersten Bakendaten korrespondieren, ferner umfasst, zu bestimmen (304), dass die zweiten Bakendaten nicht mit einer Veränderung der Bakendaten von den ersten Bakendaten korrespondieren, wenn die Anzahl von Bakenvorrichtungen, die in der zweiten Menge von Bakenvorrichtungen enthalten sind, aber nicht in der ersten Menge von Bakenvorrichtungen enthalten sind, kleiner als eine oder gleich einer Schwellenwertzahl ist, und wobei wahlweise, wenn bestimmt wird, dass die empfangenen Ortsinformationen einen sich verändernden Ort der Benutzervorrichtung angeben, und bestimmt wird, dass die zweiten Bakendaten nicht mit einer Veränderung der Bakendaten von den ersten Bakendaten korrespondieren, Bestimmen der Informationen, die einen mit der Benutzervorrichtung assoziierten Kontext angeben, umfasst, einen Transportmodus der Benutzervorrichtung abzuleiten.

4. Computerimplementiertes Verfahren nach Anspruch 2, wobei Bestimmen, ob die zweiten Bakendaten mit einer Veränderung der Bakendaten von den ersten Bakendaten korrespondieren, umfasst, zu bestimmen (304), dass die zweiten Bakendaten mit einer Veränderung der Bakendaten von den ersten Bakendaten korrespondieren, wenn die Anzahl von Bakenvorrichtungen, die in der zweiten Menge von Bakenvorrichtungen enthalten sind, aber nicht in der ersten Menge von Bakenvorrichtungen enthalten sind, größer als eine Schwellenwertzahl ist.

5. Computerimplementiertes Verfahren nach Anspruch 4, wobei, wenn bestimmt wird, dass die Ortsinformationen nicht mit einem sich verändernden Ort der Benutzervorrichtung korrespondieren, und bestimmt wird, dass die zweiten Bakendaten mit einer Veränderung der Bakendaten von den ersten Bakendaten korrespondieren, Bestimmen der Informationen, die einen mit der Benutzervorrichtung assoziierten Kontext angeben, umfasst, zu bestimmen, dass die Benutzervorrichtung sich in einer städtischen Umgebung befindet.

6. Computerimplementiertes Verfahren nach einem der vorstehenden Ansprüche, wobei:
Bestimmen der Informationen, die einen mit der Benutzervorrichtung assoziierten Kontext angeben, umfasst, zu bestimmen, dass die Benutzervorrichtung sich in einem öffentlichen Verkehrsmittel fortbewegt; und
Bereitstellen, zur Anzeige, einer oder mehrerer Benachrichtigungen umfasst, mindestens eine erste Benachrichtigung, die mindestens eines einer Route oder eines Zeitplans, assoziiert mit dem öffentlichen Verkehrsmittel, angibt, zur Anzeige bereitzustellen.

7. Computerimplementiertes Verfahren nach einem der vorstehenden Ansprüche, ferner umfassend, als Reaktion auf Bestimmen der Informationen, die einen Kontext angeben, eine Abtastrate zum Abtasten auf Bakenvorrichtungen anzupassen.

8. Computerimplementiertes Verfahren nach Anspruch 6, ferner umfassend, die bestimmten Informationen, die einen Kontext angeben, mit mindestens einem der Ortsinformationen, der ersten Bakendaten und der zweiten Bakendaten zu assoziieren.

9. Computerimplementiertes Verfahren nach Anspruch 8, ferner umfassend, die bestimmten Informationen, die einen Kontext angeben, mit der einen oder den mehreren durchgeführten Maßnahmen zu assoziieren.

10. Computerimplementiertes Verfahren nach einem der vorstehenden Ansprüche, ferner umfassend:
Empfangen einer Eingabe von einem Benutzer der Benutzervorrichtung, die eine mit dem Benutzer assoziierte gegenwärtige Aktivität angibt, und
Assoziieren der Benutzeraktivität mit den ersten Bakendaten und den zweiten Bakendaten.

11. Computerimplementiertes Verfahren nach einem der vorstehenden Ansprüche, wobei Bestimmen der Informationen, die einen mit der Benutzervorrichtung assoziierten Kontext angeben, ferner umfasst,
vorher bestimmte Informationen zu identifizieren, die einen mit mindestens einem der Ortsinformationen, der ersten Bakendaten und der zweiten Bakendaten assoziierten Kontext angeben.

12. Computerimplementiertes Verfahren nach einem der vorstehenden Ansprüche, ferner umfassend:
Bestimmen einer oder mehrerer Geschwindigkeiten, mit denen sich der Benutzer fortbewegt, über eine Zeitperiode, in der die Ortsdaten empfangen und die erste und die zweite Bakenvorrichtung detektiert werden;
wobei Bestimmen der Informationen, die einen mit der Benutzervorrichtung assoziierten Kontext angeben, umfasst, die Informationen, die einen mit der Benutzervorrichtung assoziierten Kontext angeben, basierend mindestens teilweise auf den bestimmten einen oder mehreren Geschwindigkeiten, zu bestimmen.

13. Computerimplementiertes Verfahren nach Anspruch 12, ferner umfassend:
Bestimmen, dass die eine oder mehreren Geschwindigkeiten einem mit Fahrzeugfortbewegung assoziierten Profil entsprechen;
wobei Bestimmen der Informationen, die einen mit der Benutzervorrichtung assoziierten Kontext angeben, umfasst, die Informationen, die einen mit der Benutzervorrichtung assoziierten Kontext angeben, basierend mindestens teilweise auf dem bestimmten Profil, zu bestimmen, und wobei das Profil wahlweise mindestens eine einer oder mehrerer erwarteter Geschwindigkeiten, die mit Fahrzeugfortbewegung über eine oder mehrere Zeitperioden assoziiert sind, oder den Ort eines oder mehrerer Stopps relativ zu einer Route von Fahrzeugfortbewegung umfasst.

14. Computerprogramm zum Bestimmen von Informationen, die einen mit einer Benutzervorrichtung assoziierten Kontext angeben, umfassend computerlesbare Anweisungen, die konfiguriert sind, um zu bewirken, dass die Benutzervorrichtung das Verfahren nach einem der vorstehenden Ansprüche ausführt.

15. Benutzervorrichtung zum Bestimmen von Informationen, die einen mit der Benutzervorrichtung assoziierten Kontext angeben, umfassend Mittel, die angeordnet sind, das Computerprogramm nach Anspruch 14 auszuführen.

## Revendications

1. Procédé mis en oeuvre par ordinateur (200) consistant à déterminer une information qui indique un contexte qui est associé à un dispositif d'utilisateur, le procédé étant réalisé par le dispositif d'utilisateur et comprenant :
la réception (202) d'une information de localisation qui est associée au dispositif d'utilisateur ;
la détection (204) de premières données de balise qui sont diffusées par un premier jeu de dispositifs de balise ;
suite à la détection des premières données de balise, la détection (206) de secondes données de balise qui sont diffusées par un second jeu de dispositifs de balise ;
la détermination (208) de si oui ou non l'information de localisation reçue est indicative d'un changement de localisation du dispositif d'utilisateur ;
la détermination (210) de si oui ou non les secondes données de balise correspondent à un changement au niveau de données de balise qui sont issues des premières données de balise ;
la détermination (212) d'une information qui indique un contexte qui est associé au dispositif d'utilisateur sur la base au moins en partie de si oui ou non l'information de localisation reçue correspond à un changement de localisation du dispositif d'utilisateur et sur la base au moins en partie de si oui ou non les secondes données de balise correspondent à un changement au niveau de données de balise qui sont issues des premières données de balise ; et
la fourniture en vue d'un affichage d'une ou de plusieurs notifications(s) qui est/sont associée(s) au dispositif d'utilisateur.

2. Procédé mis en oeuvre par ordinateur selon la revendication 1, dans lequel la détermination de si oui ou non les secondes données de balise correspondent à un changement au niveau de données de balise qui sont issues des premières données de balise comprend en outre l'identification (302) d'un nombre de dispositifs de balise qui sont inclus dans le second jeu de dispositifs de balise mais qui ne sont pas inclus dans le premier jeu de dispositifs de balise.

3. Procédé mis en oeuvre par ordinateur selon la revendication 2, dans lequel la détermination de si oui ou non les secondes données de balise correspondent à un changement au niveau de données de balise qui sont issues des premières données de balise comprend en outre la détermination (304) du fait que les secondes données de balise ne correspondent pas à un changement au niveau de données de balise qui sont issues des premières données de balise lorsque le nombre de dispositifs de balise qui sont inclus dans le second jeu de dispositifs de balise mais qui ne sont pas inclus dans le premier jeu de dispositifs de balise est inférieur ou égal à un nombre de seuil et en option, dans lequel, lorsqu'il est déterminé que l'information de localisation reçue est indicative d'un changement de localisation du dispositif d'utilisateur et qu'il est déterminé que les secondes données de balise ne correspondent pas à un changement au niveau de données de balise qui sont issues des premières données de balise, la détermination de l'information qui indique un contexte qui est associé au dispositif d'utilisateur comprend la déduction d'un mode de transport du dispositif d'utilisateur.

4. Procédé mis en oeuvre par ordinateur selon la revendication 2, dans lequel la détermination de si oui ou non les secondes données de balise correspondent à un changement au niveau de données de balise qui sont issues des premières données de balise comprend la détermination (304) du fait que les secondes données de balise correspondent à un changement au niveau de données de balise qui sont issues des premières données de balise lorsque le nombre de dispositifs de balise qui sont inclus dans le second jeu de dispositifs de balise mais qui ne sont pas inclus dans le premier jeu de dispositifs de balise est supérieur à un nombre de seuil.

5. Procédé mis en oeuvre par ordinateur selon la revendication 4, dans lequel, lorsqu'il est déterminé que l'information de localisation ne correspond pas à un changement de localisation du dispositif d'utilisateur et qu'il est déterminé que les secondes données de balise correspondent à un changement au niveau de données de balise qui sont issues des premières données de balise, la détermination de l'information qui indique un contexte qui est associé au dispositif d'utilisateur comprend la détermination du fait que le dispositif d'utilisateur est localisé dans un environnement urbain.

6. Procédé mis en oeuvre par ordinateur selon l'une quelconque des revendications qui précèdent, dans lequel :
la détermination de l'information qui indique un contexte qui est associé au dispositif d'utilisateur comprend la détermination du fait que le dispositif d'utilisateur est en cours de déplacement dans un véhicule de transport en commun ; et
la fourniture en vue d'un affichage d'une ou de plusieurs notification(s) comprend la fourniture en vue d'un affichage d'au moins une première notification qui indique au moins un élément informationnel pris parmi une route ou une planification temporelle qui est associée au véhicule de transport en commun.

7. Procédé mis en oeuvre par ordinateur selon l'une quelconque des revendications qui précèdent, comprenant en outre, en réponse à la détermination de l'information qui indique un contexte, le réglage d'une fréquence de balayage du balayage pour les dispositifs de balise.

8. Procédé mis en oeuvre par ordinateur selon la revendication 6, comprenant en outre l'association de l'information déterminée qui indique un contexte avec au moins un élément informationnel pris parmi l'information de localisation, les premières données de balise et les secondes données de balise.

9. Procédé mis en oeuvre par ordinateur selon la revendication 8, comprenant en outre l'association de l'information déterminée qui indique un contexte avec les une ou plusieurs actions réalisées.

10. Procédé mis en oeuvre par ordinateur selon l'une quelconque des revendications qui précèdent, comprenant en outre :
la réception d'une entrée en provenance d'un utilisateur du dispositif d'utilisateur, laquelle entrée est indicative d'une activité courante qui est associée à l'utilisateur ; et
l'association de l'activité d'utilisateur avec les premières données de balise et les secondes données de balise.

11. Procédé mis en oeuvre par ordinateur selon l'une quelconque des revendications qui précèdent, dans lequel la détermination de l'information qui indique un contexte qui est associé au dispositif d'utilisateur comprend en outre :
l'identification d'une information déterminée au préalable qui indique un contexte qui est associé à au moins un jeu informationnel pris parmi l'information de localisation, les premières données de balise et les secondes données de balise.

12. Procédé mis en oeuvre par ordinateur selon l'une quelconque des revendications qui précèdent, comprenant en outre :
la détermination d'une ou de plusieurs vitesse(s) à laquelle/auxquelles l'utilisateur se déplace sur une période temporelle pendant laquelle les données de localisation sont reçues et les premier et second dispositifs de balise sont détectés ;
dans lequel la détermination de l'information qui indique un contexte qui est associé au dispositif d'utilisateur comprend la détermination de l'information qui indique un contexte qui est associé au dispositif d'utilisateur sur la base au moins en partie des une ou plusieurs vitesses déterminées.

13. Procédé mis en oeuvre par ordinateur selon la revendication 12, comprenant en outre :
la détermination du fait que les une ou plusieurs vitesses correspondent à un profil qui est associé à un déplacement de véhicule ;
dans lequel la détermination de l'information qui indique un contexte qui est associé au dispositif d'utilisateur comprend la détermination de l'information qui indique un contexte qui est associé au dispositif d'utilisateur sur la base au moins en partie du profil déterminé et en option, dans lequel le profil comprend au moins une d'une ou de plusieurs vitesse(s) attendue(s) qui est/sont associée(s) au déplacement de véhicule sur une ou plusieurs période(s) temporelle(s), ou la localisation d'un ou de plusieurs arrêt(s) en relation avec un parcours de déplacement de véhicule.

14. Programme informatique pour déterminer une information qui indique un contexte qui est associé à un dispositif d'utilisateur, comprenant des instructions lisibles par ordinateur qui sont configurées de manière à ce qu'elles forcent le dispositif d'utilisateur à mettre en oeuvre le procédé selon l'une quelconque des revendications qui précèdent.

15. Dispositif d'utilisateur pour déterminer une information qui indique un contexte qui est associé au dispositif d'utilisateur, comprenant des moyens qui sont agencés de manière à ce qu'ils exécutent le programme informatique de la revendication 14.
